# EUROPEAN PATENT APPLICATION

(11) **EP 3 357 665 A1**
(43) Date of publication of application: **08.08.2018**
(21) Application number: 17305132.7
(22) Date of filing: 06.02.2017
(51) Int. Cl.: B29C 45/38

(54) **INJECTION MOLDS INCLUDING DE-GATING DEVICES AND METHODS FOR PRODUCING MOLDED ARTICLES USING THE SAME**

(71) Applicant: Essilor International, 94220 Charenton-le-Pont (FR)
(72) Inventor: CLARK, Gary S., 75234 Dallas, Texas (US); RYS, David J., 75234 Dallas, Texas (US); NAPKUN, Nattapop, 10520 Bangkok (TH); BUONPANE, Paul, 75234 Dallas, Texas (US)
(74) Representative: Jacobacci Coralis Harle

(57) **Abstract**

Disclosed are injection molds and methods for using the same. Some injection molds include two or more mold portions, each having a molding surface, the mold portions being movable relative to one another between an open state and a closed state in which the molding surfaces of the mold portions cooperate to define a mold cavity, an injection conduit configured to convey injection molding material to the mold cavity, and a de-gating device coupled to at least one of the mold portions, the de-gating device having a blade and an actuator coupled to the blade and configured to move the blade relative to the at least one mold portion between a retracted position and an extended position in which a cross-sectional area of a portion of the injection conduit is reduced relative to when the blade is in the retracted position.

## Description

### BACKGROUND

### A. Field of the Invention

The present invention relates generally to injection molding, and more specifically, but not by way of limitation, to injection molds including de-gating devices and methods for producing molded articles using the same.

### B. Description of Related Art

Injection molding is a technology commonly used for high-volume manufacturing of parts made from, most commonly, thermoplastic polymers. During an injection molding process, a solid plastic resin is introduced to an injection molding machine that melts the resin under heat, pressure, and shear. The molten resin is then injected into a mold cavity having a particular shape. The injected plastic is held under pressure in the mold cavity and is cooled until the injected plastic forms a solidified part having a shape that essentially duplicates the shape of the mold cavity. The cooled part can then be ejected from the mold along with hardened gate(s) and runner(s) that supplied the molten resin into the mold cavity. Injection molded parts often show evidence of the injection molding process by including gate(s), parting line(s), flash, and/or the like. Frequently, such parts require post-ejection processing in order to remove such gate(s), parting line(s), flash, and/or the like for functional and/or aesthetic purposes.

Examples of systems for facilitating de-gating of injection molded parts are disclosed in: (1) U.S. Patent No. 5,886,398; (2) U.S. Patent No. 2,739,349; (3) U.S. Patent No. 6,190,592; (4) Chinese Patent No. 102152443; (5) Chinese Patent App. No. 102814943; (6) Chinese Patent No. 102672912; (7) Chinese Patent App. No. 104162960; (8) Chinese Patent No. 201371558; (9) Chinese Patent No. 202045838; and (10) Chinese Patent No. 203092964.

### SUMMARY

Some embodiments of the present injection molds, at least via including a (e.g., internal) de-gating device, can reduce the need for post-ejection part processing (e.g., edging, finishing, removal of gate(s), parting line(s), flash, and/or the like), thereby increasing the efficiency of the injection molding process, providing for injection molded parts with increased function and/or improved aesthetics, and/or the like.

Some embodiments of the present injection molds comprise: two or more mold portions, each having a molding surface, the mold portions being movable relative to one another between an open state and a closed state in which the molding surfaces of the mold portions cooperate to define a mold cavity, an injection conduit configured to convey injection molding material to the mold cavity, and a de-gating device coupled to at least one of the mold portions, the de-gating device having a blade and an actuator coupled to the blade and configured to move the blade relative to the at least one mold portion between a retracted position and an extended position in which a cross-sectional area of a portion of the injection conduit is reduced relative to when the blade is in the retracted position. In some embodiments, at least one of the mold portions includes a removable insert that defines at least a portion of the molding surface of the mold portion.

In some embodiments, the actuator is configured to move the blade between the retracted position and the extended position while the mold portions are in the closed state. In some embodiments, the blade is movable between the retracted position and the extended position independently of movement of the mold portions between the open state and the closed state. In some embodiments, the blade is slidably coupled to the at least one of the mold portions. In some embodiments, the actuator comprises an electric, hydraulic, and/or pneumatic actuator.

In some embodiments, when the blade is in the retracted position, the portion of the injection conduit has a first minimum cross-sectional area, when the blade is in the extended position, the portion of the injection conduit has a second minimum cross-sectional area, and the second minimum cross-sectional area is between 0 and approximately 60% of the first minimum cross-sectional area. In some embodiments, when the blade is in the extended position, the injection conduit is closed.

In some embodiments, when the blade is in the extended position, a surface of the blade is flush with the molding surface of at least one of the mold portions. In some embodiments, an end of the blade that is disposed closest the injection conduit defines a cutting edge. In some embodiments, an end of the blade that is disposed closest to the injection conduit includes a surface that is angularly disposed at a non-perpendicular angle relative to a plane that is perpendicular to a longitudinal axis of the injection conduit. In some embodiments, an end of the blade that is disposed closest to the injection conduit includes a surface that partially defines the portion of the injection conduit.

Some embodiments comprise one or more sensors configured to capture data indicative of a pressure of injection molding material within the mold and/or a temperature of injection molding material within the mold, and a processor configured to control the actuator to move the blade from the retracted position and toward the extended position if data captured by the one or more sensors indicates that a pressure of injection molding material within the mold is at or below a threshold pressure and/or a temperature of injection molding material within the mold is at or below a threshold temperature.

Some embodiments of the present methods for forming a molded article using an embodiment of the present injection molds comprise: injecting, through the injection conduit, injection molding material into the mold cavity, moving the blade of the de-gating device from the retracted position to the extended position, and, after moving the blade, moving the mold portions to the open state. The molded article can be any molded article; for example, in some embodiments the molded article comprises an ophthalmic lens.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially," "approximately," and "about" may be substituted with "within [a percentage] of" what is specified, where the percentage includes .1, 1, 5, and 10 percent.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), "include" (and any form of include, such as "includes" and "including"), and "contain" (and any form of contain, such as "contains" and "containing") are open-ended linking verbs. As a result, an apparatus that "comprises," "has," "includes," or "contains" one or more elements possesses those one or more elements, but is not limited to possessing only those one or more elements. Likewise, a method that "comprises," "has," "includes," or "contains" one or more steps possesses those one or more steps, but is not limited to possessing only those one or more steps.

Any embodiment of any of the apparatuses, systems, and methods can consist of or consist essentially of - rather than comprise/have/include/contain - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. The figures are drawn to scale (unless otherwise noted), meaning the sizes of the depicted elements are accurate relative to each other for at least the embodiment depicted in the figures.
**FIGs. 1A** and **1B** are cross-sectional side views of one embodiment of the present injection molds, showing a de-gating device in a retracted position and an extended position, respectively.
**FIGs. 2A** and **2B** are side views of a molded article that can be formed using the injection mold of FIGs. 1A and 1B, shown before partial de-gating and after partial de-gating, respectively.
**FIGs. 3A** and **3B** are cross-sectional side views of one embodiment of the present injection molds, showing a de-gating device in a retracted position and an extended position, respectively.

### DETAILED DESCRIPTION

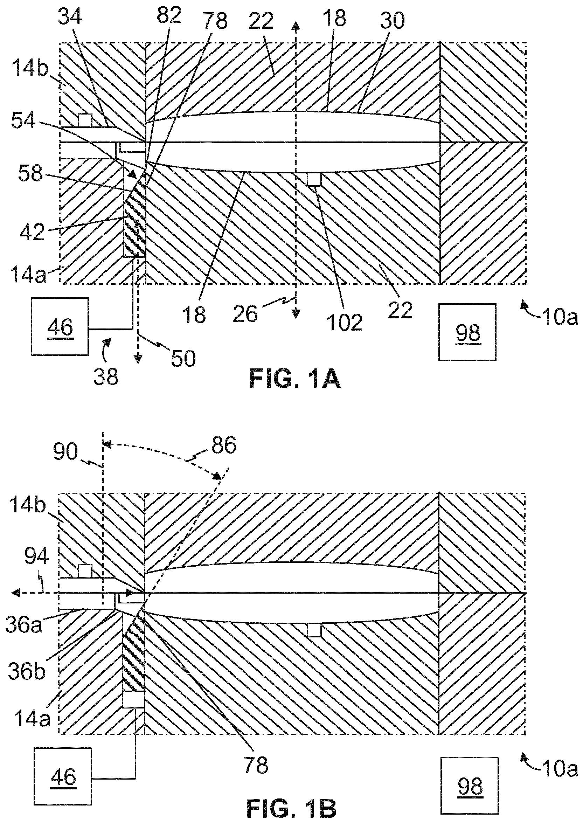

Referring now to FIGs. 1A and 1B, shown is an injection mold 10a. Mold 10a can include two or more mold portions (e.g., 14a and 14b), each defining a molding surface 18 (e.g., a surface that at least partially defines a boundary of a part formable within the mold). At least one of the mold portions can be movable (e.g., generally in a direction indicated by arrow 26) relative to at least one other of the mold portions between an open state and a closed state in which molding surfaces 18 cooperate to define a mold cavity 30 (e.g., FIGs. 1A and 1B). Such relative movement of the mold portions can be accomplished in any suitable fashion, such as, for example, via one or more hydraulic, electric, pneumatic, and/or the like actuators.

For at least one of the mold portions (e.g., 14a and/or 14b), molding surface 18 can be at least partially defined by an insert 22 that can be coupled to (e.g., received by) the mold portion. Such an insert (e.g., 22) can be removable from its respective mold portion and, in some instances, replaceable with another insert to change the geometry of molding surface 18 of the mold portion. Such functionality can, for example, facilitate use of the mold portion in forming molded articles having differing shapes (e.g., ophthalmic lenses having differing radii of curvature).

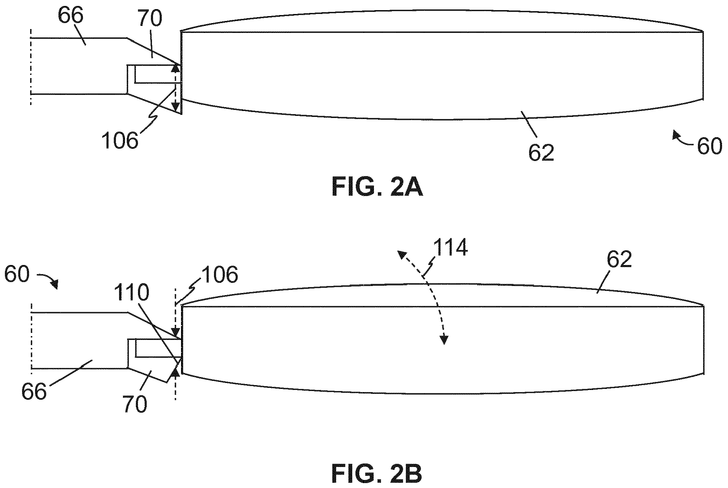

Mold 10a can include an injection conduit 34 configured to convey injection molding material to mold cavity 30. Injection conduit 34 can be defined by at least two of the mold portions (e.g., 14a and 14b) when the mold portions are in the closed state. Injection conduit 34 can include a runner portion 36a and a gate portion 36b, where, when an injection molded article (e.g., 60, FIGs. 2A and 2B) is formed within mold 10a, the runner portion forms at least a portion of a runner (e.g., 66) of the molded article, and the gate portion forms at least a portion of a gate (e.g., 70) of the molded article.

Mold 10a can include a de-gating device 38 coupled to at least one of the mold portions (e.g., 14a and/or 14b) and configured to at least partially de-gate a part (e.g., 62, FIGs. 2A and 2B) formed within the mold. De-gating a part (e.g., 62) is a process in which at least a portion of a gate (e.g., 70) that is attached to the part is separated from the part. Partial de-gating, which can facilitate subsequent de-gating, can be performed by, for example, reducing one or more dimensions (e.g., a thickness) of at least a portion of the gate, forming a slit, cut, or opening in the gate, and/or the like, though the gate, or at least a portion thereof, may remain attached to the part.

For example, de-gating device 38 can include a blade 42 that is movably (e.g., slidably) coupled to at least one of the mold portions (e.g., 14a and/or 14b), where the blade is configured to contact a gate (e.g., 70) of an injected molded article (e.g., 60) when the injection molded article is formed within mold 10a. More particularly, blade 42 can be movable (e.g., generally in a direction indicated by arrow 50) relative to the mold portion between a retracted position (e.g., FIG. 1A) and an extended position (e.g., FIG. 1B) in which the blade extends farther into a portion of injection conduit 34, such as gate portion 36b, than when the blade is in the retracted position and/or in which a cross-sectional area of the portion of the injection conduit is reduced relative to when the blade is in the retracted position. To illustrate, when blade 42 is in the retracted position, the portion of injection conduit 34 can have a first minimum cross-sectional area, when the blade is in the extended position, the portion of the injection conduit can have a second minimum cross-sectional area, and the second minimum cross-sectional area can be less than or equal to any one of, or between any two of: 1, 2, 3, 4, 5, 6, 7, 8, 9, 10, 12, 14, 16, 18, 20, 22, 24, 26, 28, 30, 35, 40, 45, 50, 55, 60, 65, 70, 75, 80, 85, 90, or 95% of the first minimum cross-sectional area (e.g., between approximately 0% and approximately 60% of the first minimum cross-sectional area). In some embodiments, when blade 42 is in the extended position, injection conduit 34 is closed (e.g., the injection conduit is completely obstructed by the blade). Movement of blade 42 relative to the mold portion can be accomplished in any suitable fashion, such as, for example, via an actuator 46 (e.g., an electric, hydraulic, and/or pneumatic actuator).

Blade 42 can be configured to facilitate insertion of the blade into and/or through a gate (e.g., 70) of an injection molded article (e.g., 60). For example, an end 54 of blade 42 that is disposed closest to injection conduit 34 can have an edge 82, which can include sharp (e.g., as in a cutting edge) and/or rounded portion(s) and/or straight and/or curved (e.g., concave and/or convex, relative to the injection conduit) portion(s). For further example, at end 54, at least a portion of blade 42 can be tapered. To illustrate, blade 42 at end 54 can include a surface 58 that is angularly disposed at a non-perpendicular angle 86 relative to a plane 90 that is perpendicular to a longitudinal axis 94 of injection conduit 34. Angle 86 can be greater than or equal to any one of, or between any two of: 5, 7, 10, 12, 15, 17, 20, 22, 25, 27, 30, 32, 35, 37, 40, 42, 45, 47, 50, 52, 55, 57, 60, 65, 70, 75, 80, or 85 degrees. In some embodiments, a blade (e.g., 42) can have an end (e.g., 54) that includes a serrated edge (e.g., 82), one or more protrusions (e.g., for forming opening(s) into and/or through a gate 70), and/or the like.

Blade 42 can be configured to reduce the need for processing (e.g., edging, finishing, removal of gate(s) 70, parting line(s), flash, and/or the like) of a part (e.g., 62) of an injection molded article (e.g., 60) after the injection molded article and/or the part are removed from mold 10a. For example, when blade 42 is in the extended position, a surface 78 of the blade can be flush (e.g., even and/or level with, but not necessarily in contact with) molding surface 18 of at least one of the mold portions (e.g., 14a and/or 14b). To illustrate, a line that is tangent to surface 78 can also be tangent to molding surface 18 of the mold portion, surface 78 and the molding surface can have corresponding (e.g., substantially matching) curvatures, and/or the like. For further example, when blade 42 is in the extended position, a surface (e.g., 78) of the blade can partially define a molding surface 18 of at least one of the mold portions. To illustrate, as shown in FIG. 1B, surface 78 of blade 42 can define a boundary of a portion of a part formable within mold portion 14a. In these ways and others, as blade 42 is moved from the retracted position to the extended position, the blade can shave at least a portion of a gate (e.g., 70), parting line(s), flash, and/or the like from a part (e.g., 62), thereby reducing the need for post-ejection processing of the part.

Blade 42 can be movable between the retracted position and the extended position independently of movement of the mold portions (e.g., 14a and 14b) between the open state and the closed state. For example, blade 42 can be moved between the retracted position and the extended position without moving the mold portions between the open state and the closed state, the mold portions can be moved between the open state and the closed state without moving the blade relative to at least one of the mold portions, and/or the like. More particularly, blade 42 can be movable between the retracted position and the extended position while the mold portions are in the closed state, which can facilitate de-gating or partial de-gating of a part (e.g., 62) formed within mold 10a while the part is disposed within the mold.

Mold 10a can include a processor 98 configured to control movement of blade 42 between the retracted and extended positions (e.g., via control of actuator 46). For example, processor 98 can be configured to move blade 42 from the retracted position to the extended position after (e.g., a period of time after, which may be pre-determined) the mold portions (e.g., 14a and 14b) move to the closed state, injection molding material is provided to mold cavity 30, and/or the like. As used herein, a "processor" encompasses a programmable logic controller.

Mold 10a can include one or more sensors 102. Sensor(s) 102 can comprise any suitable sensor, such as, for example, a pressure sensor (e.g., a piezoelectric, strain gauge, and/or the like pressure sensor), flow sensor (e.g., a turbine, electromagnetic, ultrasonic, and/or the like flow sensor, a mass flow sensor, a flow sensor configured to approximate a flow rate based, at least in part, on data indicative of pressure, and/or the like), temperature sensor (e.g., a thermocouple, resistance temperature detector, and/or the like), position, velocity, and/or acceleration sensor (e.g., a Hall effect sensor, accelerometer, optical sensor, and/or the like), and/or the like. Sensor(s) 102 can be configured to capture data indicative of any suitable parameter(s), such as, for example, a position, velocity, and/or acceleration of blade 42 relative to at least one of the mold portions (e.g., 14a and/or 14b), a position, velocity, and/or acceleration of at least one of the mold portions relative to at least one other of the mold portions, temperature, pressure, flow rate, and/or the like of injection molding material within injection conduit 34, mold cavity 30, and/or the like, and/or the like.

Control of blade 42 by processor 98 can be facilitated by data captured by sensor(s) 102. For example, processor 98 can control actuator 46 to move blade 42 from the retracted position to the extended position once a temperature, pressure, and/or flow rate of injection molding material within injection conduit 34 and/or mold cavity 30, as indicated in data captured by sensor(s) 102, nears, meets, or falls below (e.g., is within 1, 2, 3, 4, 5, 6, 7, 8, 9, or 10% of) a threshold temperature, pressure, and/or flow rate. Such a threshold temperature, pressure, and/or flow rate may be a temperature, pressure, and/or flow rate at which injection molding material is substantially prevented (e.g., due to its viscosity) from flowing between injection conduit 34 and mold cavity 30 (e.g., a temperature, pressure, and/or flow rate at which gate freeze occurs, which may vary depending on the composition of the injection molding material). To illustrate, processor 98, using data captured by sensor(s) 102, can control actuator 46 to move blade 42 from the retracted position and toward the extended position once gate freeze has occurred and/or the pack and hold phase has ended and/or as gate freeze is occurring and/or the pack and hold phase is ending (e.g., when injection molding material in gate portion 36b of injection molding conduit 34 is fully solidified or is partially solidified yet relatively displaceable).

For further example, if data captured by sensor(s) 102 indicates that a position, velocity, and/or acceleration of blade 42 relative to at least one of the mold portions (e.g., 14a and/or 14b) differs (e.g., by more than 1, 2, 3, 4, 5, 6, 7, 8, 9, or 10%) from a corresponding target position, velocity, and/or acceleration, processor 98 can control actuator 46 to adjust the position, velocity, and/or acceleration of the blade relative to the mold portion toward the target position, velocity, and/or acceleration (e.g., allowing for precise control of the position, velocity, and/or acceleration of the blade relative to the mold portion).

In some embodiments, a processor (e.g., 98) can control an actuator (e.g., 46) to move a blade (e.g., 42) from a retracted position (e.g., FIG. 1A) to an extended position (e.g., FIG. 1B) based on one or more temporal parameters. For example, in such embodiments, the processor can control the actuator to move the blade from the retracted position and toward the extended position once the pack and hold phase has commenced and after a percentage of the (e.g., pre-determined) hold time has elapsed (e.g., after a percentage of the hold time that is greater than or substantially equal to any one of, or between any two of: 50, 55, 60, 65, 70, 75, 80, 85, 90, 95, 100, 105, 110, 115, 120, or more % of the hold time has elapsed).

Referring now to FIGs. 2A and 2B, shown are side views of an injection molded article 60 that can be formed using an embodiment (e.g., 10a, 10b) of the present molds, shown before partial de-gating (FIG. 2A) and after partial de-gating (FIG. 2B). Injection molded article 60 can include a part 62, a runner 66, and a gate 70 that connects the part to the runner. As shown, via partial de-gating, one or more dimensions (e.g., thickness 106) of a portion of gate 70 can be reduced, a slit, cut, or opening 110 can be formed in the gate, and/or the like.

Such partial de-gating, at least via weakening gate 70, can facilitate subsequent decoupling of at least a portion of the gate from part 62. To illustrate, once injection molded article 60 has been partially de-gated, part 62 can be rotated relative to gate 70 (e.g., generally in a direction indicated by arrow 114) in order to break (e.g., snap) the gate at or proximate to the location where dimension(s) of the gate were reduced and/or of slit, cut, or opening 110, thereby separating the part from at least a portion of the gate. As shown, the location where dimension(s) of gate 70 were reduced and/or of slit, cut, or opening 110 can be adjacent to part 62 such that, for example, little to none of the gate remains attached to the part after separation of the gate and the part.

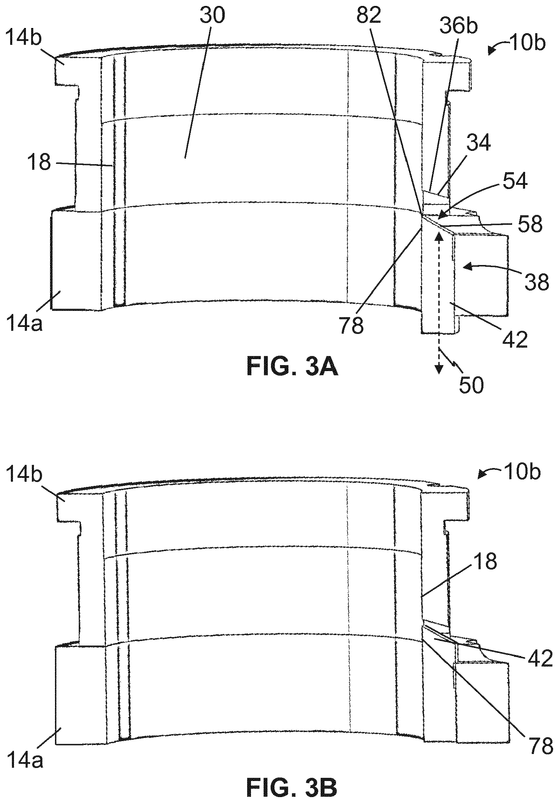

Referring now to FIGs. 3A and 3B, shown are cross-sectional side views of one embodiment 10b of the present molds, showing a de-gating device 38 in a retracted position (FIG. 3A) and an extended position (FIG. 3B). Mold 10b can be substantially similar to mold 10a.

Some embodiments of the present methods for forming an injection molded article (e.g., 60) using an injection mold (e.g., 10a, 10b) comprise injecting, through an injection conduit (e.g., 34) of the mold, injection molding material into a mold cavity (e.g., 30) of the mold. As injection molding material is provided to the mold cavity, a blade (e.g., 42) of a de-gating device (e.g., 38) can be in a retracted position (e.g., FIGs. 1A and 3A) (e.g., to minimize obstruction of the injection conduit by the blade). The blade can then be moved from the retracted position to an extended position (e.g., FIGs. 1B and 3B) in order to de-gate or partially de-gate the injection molded article. Movement of the blade from the retracted position to the extended position can be performed at or proximate to a time when gate freeze occurs (e.g., facilitated by a processor 98 and/or one or more sensors 102, as described above). In some embodiments, after the blade has been moved to the extended position (e.g., and maintained in the extended position for a period of time), the blade can be moved toward the retracted position. Finally, the mold can be opened, and at least a portion of the injection molded article (e.g., part 62) can be removed from the mold. In some embodiments, the injection molded article comprises an ophthalmic lens.

Typical injection molding materials include small beads or pellets of meltable plastics and/or resins that can be forcefully injected under heat and pressure into a mold cavity. An injection molding material can include a thermoplastic material, such as polyethyleneimine, polyetherimide, or a derivative thereof, polyethylene terephthalate, polycarbonate, polybutylene terephthalate, poly(1,4-cyclohexylidene cyclohexane-1,4-dicarboxylate), glycol-modified polycyclohexyl terephthalate, poly(phenylene oxide), polypropylene, polyethylene, polyvinyl chloride, polystyrene, polymethyl methacrylate, thermoplastic elastomer, terephthalic acid elastomer, poly(cyclohexanedimethylene terephthalate), polyethylene naphthalate, polyamide (e.g., PA6, PA66, and/or the like), polysulfone sulfonate, polyether ether ketone, polyether ketone ketone, acrylonitrile butyldiene styrene, polyphenylene sulfide, polycarbonate/polybutylene succinate, a copolymer thereof, or a combination thereof. A thermoplastic injection molding material can comprise a blend of high, medium, and low molecular polymers, yielding a multi-modal or bi-modal blend. Such a multi-modal material can have superior flow properties as well as satisfactory chemo/physical properties. Preferably, the thermoplastic material is chosen for molding ophthalmic lenses, for example, polycarbonate.

An injection molding material can include a thermoset material, such as unsaturated polyester resin, polyurethane, bakelite, duroplast, urea-formaldehyde, diallyl-phthalate, epoxy resin, epoxy vinylester, polyimide, cyanate ester of polycyanurate, dicyclopentadiene, benzoxazine, a copolymer thereof, or a combination thereof.

An injection molding material can comprise a blend of polymeric and non-polymeric materials. For example, a thermoplastic injection molding material can comprise a blend of a polymer and one or more small molecule additives. Such a small molecule could be, for example, a siloxane or other lubricating molecule that, when added to the thermoplastic material, improves the flowability of the polymeric material. Other additives may include inorganic fillers such as calcium carbonate, calcium sulfate, talcs, clays (e.g., nanoclays), aluminum hydroxide, CaSiO₃, glass formed into fibers or microspheres, crystalline silicas (e.g., quartz, novacite, crystallobite), magnesium hydroxide, mica, sodium sulfate, lithopone, magnesium carbonate, iron oxide, and/or organic fillers such as rice husks, straw, hemp fiber, wood flour, or wood, bamboo, or sugarcane fiber. An injection molding material can be filled (e.g., with fibers) or unfilled.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. An injection mold having:
two or more mold portions, each having a molding surface, the mold portions being movable relative to one another between an open state and a closed state in which the molding surfaces of the mold portions cooperate to define a mold cavity;
an injection conduit configured to convey injection molding material to the mold cavity; and
a de-gating device coupled to at least one of the mold portions, the de-gating device having:
a blade; and
an actuator coupled to the blade and configured to, while the mold portions are in the closed state, move the blade relative to the at least one mold portion between a retracted position and an extended position in which a cross-sectional area of a portion of the injection conduit is reduced relative to when the blade is in the retracted position.

2. The injection mold of claim 1, wherein, when the blade is in the extended position, a surface of the blade is flush with the molding surface of at least one of the mold portions.

3. An injection mold having:
two or more mold portions, each having a molding surface, the mold portions being movable relative to one another between an open state and a closed state in which the molding surfaces of the mold portions cooperate to define a mold cavity;
an injection conduit configured to convey injection molding material to the mold cavity; and
a de-gating device coupled to at least one of the mold portions, the de-gating device having:
a blade; and
an actuator coupled to the blade and configured to move the blade relative to the at least one mold portion between a retracted position and an extended position in which a cross-sectional area of a portion of the injection conduit is reduced relative to when the blade is in the retracted position;
wherein, when the blade is in the extended position, a surface of the blade is flush with the molding surface of at least one of the mold portions.

4. The injection mold of claim 3, wherein the actuator is configured to move the blade between the retracted position and the extended position while the mold portions are in the closed state.

5. The injection mold of any of claims 1-4, wherein the blade is movable between the retracted position and the extended position independently of movement of the mold portions between the open state and the closed state.

6. The injection mold of any of claims 1-4, wherein:
when the blade is in the retracted position, the portion of the injection conduit has a first minimum cross-sectional area;
when the blade is in the extended position, the portion of the injection conduit has a second minimum cross-sectional area; and
the second minimum cross-sectional area is between approximately 0% and approximately 60% of the first minimum cross-sectional area.

7. The injection mold of any of claims 1-4, wherein, when the blade is in the extended position, the injection conduit is closed.

8. The injection mold of any of claims 1-4, wherein the blade is slidably coupled to the at least one of the mold portions.

9. The injection mold of any of claims 1-4, wherein an end of the blade that is disposed closest to the injection conduit defines a cutting edge.

10. The injection mold of any of claims 1-4, wherein an end of the blade that is disposed closest to the injection conduit includes a surface that is angularly disposed at a non-perpendicular angle relative to a plane that is perpendicular to a longitudinal axis of the injection conduit.

11. The injection mold of any of claims 1-4, wherein an end of the blade that is disposed closest to the injection conduit includes a surface that partially defines the portion of the injection conduit.

12. The injection mold of any of claims 1-4, wherein the actuator comprises an electric, hydraulic, and/or pneumatic actuator.

13. The injection mold of any of claims 1-4, wherein at least one of the mold portions includes a removable insert that defines at least a portion of the molding surface of the mold portion.

14. The injection mold of any of claims 1-4, comprising:
one or more sensors configured to capture data indicative of a pressure of injection molding material within the mold and/or a temperature of injection molding material within the mold; and
a processor configured to control the actuator to move the blade from the retracted position and toward the extended position if data captured by the one or more sensors indicates that a pressure of injection molding material within the mold is at or below a threshold pressure and/or a temperature of injection molding material within the mold is at or below a threshold temperature.

15. A method for forming an injection molded article using the injection mold of any of claims 1-4, comprising:
injecting, through the injection conduit, injection molding material into the mold cavity;
moving the blade of the de-gating device from the retracted position to the extended position; and
after moving the blade, moving the mold portions to the open state.
